# EUROPÄISCHE PATENTSCHRIFT

(11) **EP 2 222 521 B1**
(45) Veröffentlichungstag und Bekanntmachung des Hinweises auf die Patenterteilung: **03.04.2013**
(21) Anmeldenummer: 08804601.6
(22) Anmeldetag: 23.09.2008
(51) Int. Cl.: B60S 1/38

(54) **ANZEIGEVORRICHTUNG FÜR EIN WISCHBLATT**
DISPLAY DEVICE FOR A WIPER BLADE
DISPOSITIF D'AFFICHAGE POUR UNE RACLETTE D'ESSUIE-GLACE

(30) Priorität: 22.11.2007 DE 102007056322
(43) Veröffentlichungstag der Anmeldung: 01.09.2010
(73) Patentinhaber: Robert Bosch GmbH, 70442 Stuttgart (DE)
(72) Erfinder: BEELEN, Hans, B-3540 Herk de Stad (BE); VAN ROELEN, Renaat, B-3300 Vissenaken (BE); HERINCKX, Dirk, B-3350 Dries-Linter (BE)
(86) Internationale Anmeldenummer: PCT/EP2008/062684
(87) Internationale Veröffentlichungsnummer: WO 2009/065647

(56) Entgegenhaltungen:
- WO-A-95/01896
- WO-A-2007/071508
- WO-A-2008/145481
- DE-A1- 3 639 831
- DE-A1- 19 856 300
- FR-A- 2 860 470
- FR-A1- 2 899 544
- US-A- 5 349 718
- US-A1- 2006 026 786

## Beschreibung

### Stand der Technik

Die Erfindung geht von einer Anzeigevorrichtung nach dem Oberbegriff des Anspruchs 1 aus.

Aus der WO 95/01896 ist eine Anzeigevorrichtung in Form eines Klipps aus Kunststoff bekannt, die an einem Tragbügelsystem eines Wischblatts befestigt ist. Das Kunststoffteil ist aus einem Material hergestellt, dessen Farbe sich unter Einwirkung von einem der Umwelteinflüsse im Laufe von etwa sechs Monaten so stark verändert, dass dies dem Fahrer des Fahrzeugs auffällt und dieser den notwendigen Wischblattwechsel vornimmt. Das Kunststoffteil kann an einem Bügel des Tragbügelsystems verrastet werden. Dazu weist es an seiner Unterseite auslenkbare Rasthaken auf, die unter Auffederung durch Durchbrüche in einem Bügel hindurchgreifen.

Aus der US 6 047 436 ist ein Wischblatt bekannt, an dessen Tragbügelsystem ebenfalls eine Anzeigevorrichtung befestigt ist, durch die die kumulative Belastung durch Ozon gemessen und angezeigt wird. In Abhängigkeit von der Ozonbelastung ändert sich die Farbe des Anzeigefeldes der Anzeigevorrichtung.

Ferner ist aus der DE 699 25 738 C2 eine Anzeigevorrichtung bekannt, die an einem Wischblatt mit einem Tragbügelsystem befestigt ist. Das Anzeigefeld der Anzeigevorrichtung ändert seine Farbe in Abhängigkeit von der Zeitdauer, über die die Anzeigevorrichtung Wasser ausgesetzt gewesen ist.

US-A-2006/0026786 offenbart den Oberbegriff des Anspruchs 1

### Offenbarung der Erfindung

Nach der Erfindung hat die Anzeigevorrichtung ein gleiches Querschnittprofil wie ein Spoiler des Wischblatts, das eine Flachbalkenbauweise aufweist. Dabei passt das Innenprofil der Anzeigevorrichtung auf das Außenprofil des Spoilers. Dadurch können große Anzeigefelder realisiert werden, die vom Fahrzeugfahrer nicht übersehen werden. Trotzdem werden die Wischfunktion und die Geräuschentwicklung nicht ungünstig beeinflusst. Außerdem können in vorteilhafter Weise mehrere voneinander getrennte Anzeigenfelder vorgesehen werden. Diese können auf eine Anströmseite und eine Abströmseite der Anzeigevorrichtung verteilt werden. Dabei ist es vorteilhaft, Anzeigefelder, die die Belastung durch Umweltparameter anzeigen, auf der Abströmseite der Anzeigevorrichtung zu platzieren, da diese in der Parkstellung des Wischblatts in der Regel am meisten den Umwelteinflüssen ausgesetzt ist. Es können auch mehrere abgegrenzte Anzeigefelder vorgesehen werden, die die Einflüsse unterschiedlicher Witterungs- oder Umweltfaktoren einzeln und getrennt erfassen.

Außerdem ist es vorteilhaft, auf der gleichen Seite Angaben des Wischblattherstellers vorzusehen, sodass ohne großen Aufwand im Bedarfsfall ein neues Wischblatt oder eine Wischleiste besorgt werden kann. Gemäß einer Ausgestaltung der Erfindung wird vorgeschlagen, dass auf der Anströmseite der Anzeigevorrichtung ein Anzeigefeld für Angaben eines Fahrzeugherstellers vorgesehen ist. Die Anzeigevorrichtung kann je nach Bedarf und Designererfordernissen sich über eine kleinere oder größere Länge des Spoilers erstrecken.

Gemäß einer weiteren Ausgestaltung der Erfindung besteht das Anzeigefeld aus einem Grundmaterial oder ist mit einem solchen beschichtet, das mit der zeitlichen Belastung durch die Witterungs- oder Umwelteinflüsse seine Farbe ändert und eine Beschriftung enthält, deren Farbe gleich der Ausgangsfarbe des Materials des Anzeigefelds ist, sich aber nicht oder unterschiedlich zum Grundmaterial des Anzeigefelds verändert. In einem solchen Anzeigefeld können Informationen untergebracht werden, die mit der Alterung des Wischblatts sichtbar werden, z.B. die Typenbezeichnung und/oder die Bausatznummer für ein neues Ersatzteil.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

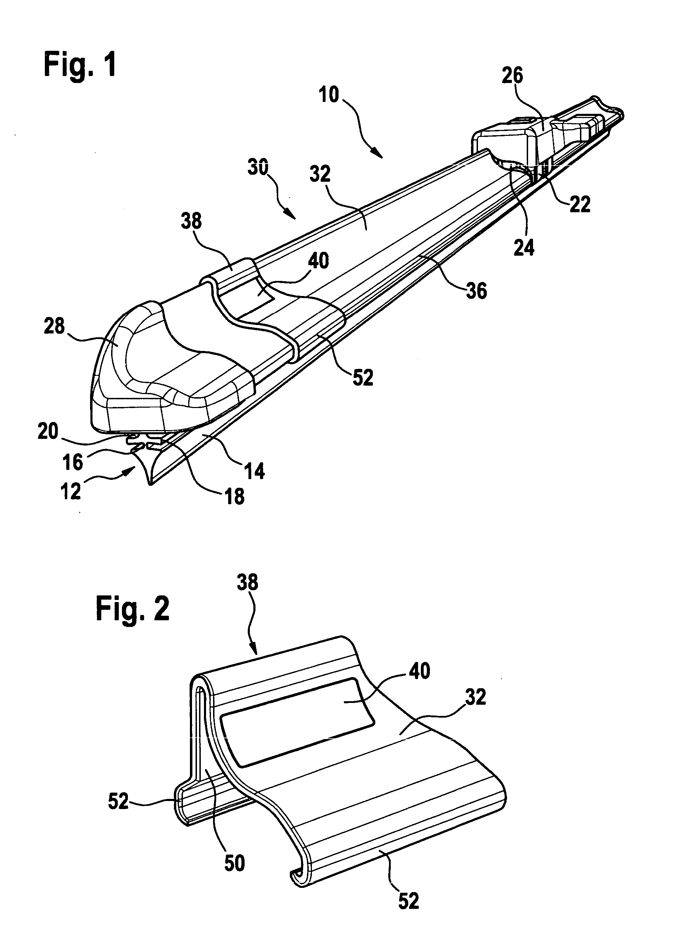

- Fig. 1: eine perspektivische Ansicht eines Wischblatts mit einer erfindungsgemäßen Anzeigevorrichtung von einer Anströmseite,
- Fig. 2: eine perspektivische Ansicht einer Anzeigevorrichtung nach Fig. 1 in vergrößertem Maßstab,

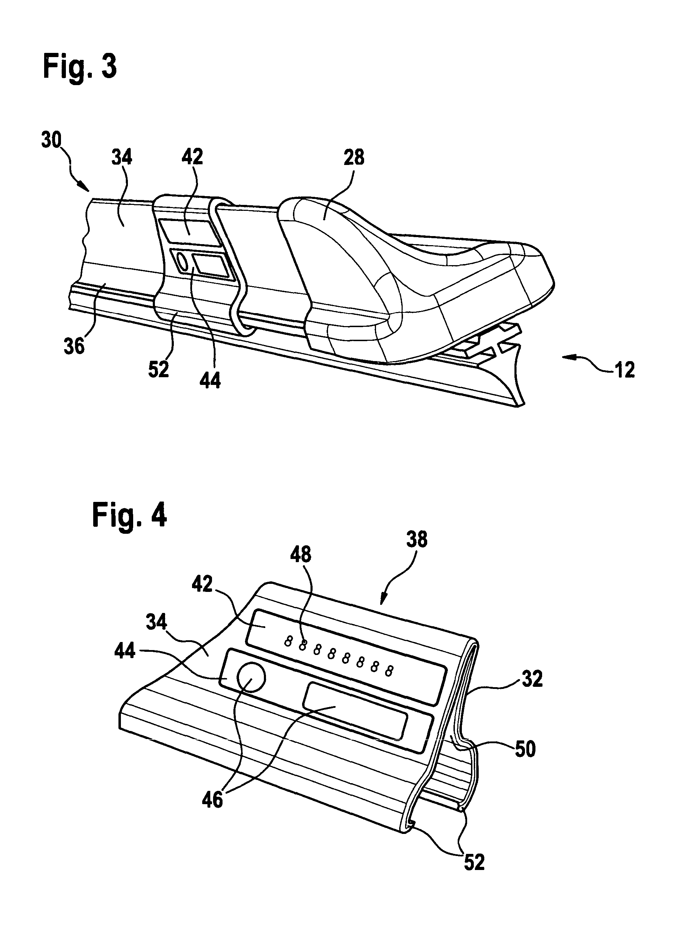

- Fig. 3: eine perspektivische Ansicht eines Wischblatts nach Fig. 1 von einer Abströmseite und
- Fig. 4: eine perspektivische Ansicht einer Anzeigevorrichtung nach Fig. 3 in vergrößertem Maßstab.

### Ausführungsformen der Erfindung

Ein Wischblatt 10 umfasst eine Wischleiste 12, deren Wischlippe 14 über einen Kippsteg 16 mit einer Kopfleiste 18 verbunden ist. In seitliche Längsnuten 20 der Kopfleiste 18 sind als Tragelement Federschienen eingesetzt, die durch einen auf die Federschienen montierten Spoiler 30 verdeckt sind. Endkappen 28 schließen den Spoiler 30 an seinen Enden ab. Im mittleren Bereich des Wischblatts 10 ist ein Anschlusselement 24 mit Krallen 22 an den Federschienen befestigt. Das Anschlusselement 24 dient zum gelenkigen Verbinden eines Wischarms über dessen Verbindungselement 26.

Der Spoiler 30 besitzt auf einer Anströmseite 32 ein Strömungsprofil, wodurch das Wischblatt 10 während der Fahrt eines Kraftfahrzeugs vom Fahrtwind gegen eine nicht dargestellte Fahrzeugscheibe gedrückt wird. Die Anströmseite 32 ist an ihrer von der Wischleiste 12 abgewandten Seite mit einer Abströmseite 34 verbunden. Die freien Längskanten der Anströmseite 32 und der Abströmseite 34 bilden Ränder 36, die die Federschienen umfassen.

Auf dem Außenprofil des Spoilers 30 ist eine Anzeigevorrichtung 38 aus Kunststoff befestigt. Sie besitzt im Wesentlichen das gleiche Querschnittprofil wie der Spoiler 30, wobei ein Innenprofil 50 der Anzeigevorrichtung 38 auf das Außenprofil des Spoilers 30 passt, das im Wesentlichen durch die Anströmseite 32, die Abströmseite 34 und die Ränder 36 gebildet wird. An den der Wischleiste 12 zugewandten Rändern 36 hat die Anzeigevorrichtung 38 Klauen 52, mit denen sie auf den Spoiler 30 geklippst ist und dort gehalten wird. Die Anzeigevorrichtung 38 besitzt mehrere von einander getrennte Anzeigefelder 40, 42, 44. Grundsätzlich sind die Anordnung und Verwendung der Anzeigefelder 40, 42, 44 beliebig, jedoch kann es vorteilhaft sein, auf der Anströmseite 32 ein Anzeigefeld 40 für Informationen des Fahrzeugherstellers vorzusehen, während auf der Abströmseite 34, die in der Parkposition des Wischblatts 10 in der Regel nach außen weist, zweckmäßigerweise ein oder mehrere Anzeigefelder 42 für die Anzeige der Belastung und Abnutzung durch Witterungs- und Umwelteinflüsse vorgesehen werden. Ferner ist ein Anzeigefeld 44 für Informationen des Wischblattherstellers 46 vorgesehen. Schließlich enthält das Anzeigenfeld 42, das den Einfluss von Witterungs-und Umweltfaktoren anzeigt, eine Beschriftung 48, deren Farbe gleich der Ausgangsfarbe des Grundmaterials des Anzeigefelds 42 ist, sich aber nicht oder unterschiedlich zu dem Grundmaterial des Anzeigefelds 42 verändert. Somit ist die Beschriftung 48 im Neuzustand nicht lesbar und hebt sich erst mit zunehmender Belastung von dem Grundmaterial des Anzeigefelds 42 ab. Die Beschriftung 48 kann Informationen über die Typenbezeichnung und die Nummern der Ersatzteile enthalten. Ist das Grundmaterial des Anzeigefelds 42 im Neuzustand schwarz und verfärbt es sich mit zunehmender UV-Einstrahlung gelb, tritt die Beschriftung 48 im verschlissenen Zustand als schwarze Schrift auf gelbem Untergrund hervor. Es sind aber auch andere Unterschiede denkbar, z.B. dass die Beschriftung im verschlissenen Zustand zwar einen gleichen Farbton wie das Grundmaterial aufweist, jedoch deutlich heller oder dunkler ist.

## Patentansprüche

1. Wischblatt, umfassend eine Wischleiste (12) mit einer Wischlippe (14), die über einen Kippsteg (16) mit einer Kopfleiste (18) verbunden ist, wobei die Kopfleiste (18) seitliche Längsnuten (20) aufweist, in denen als Tragelement Federschienen eingesetzt sind, die durch Ränder (36) eines montierten Speilers (30) verdeckt sind und an denen ein Anschlusselement (24) zum gelenkigen Verbinden eines Wischarms befestigt ist wobei Endkappen den Spoiler an seinen Enden abschliessen, **gekennzeichnet durch** eine Anzelgevorrichtung (38), die aus einem Kunststoffteil mit einem Anzeigefeld (40, 42, 44) für die Anzeige der Belastung und Abnutzung **durch** Witterungs-und-Umwelteinflüsse besteht und mittels Klauen (52) an den Rändern (35) des Spoilers geklippst ist, wobei die Anzeigevorrichtung (38) ein gleiches Querschnittprofil wie der Spoiler (30) des Wischblatts (10) hat und das Innenprofil (50) der Anzeigevorrichtung (38) auf das Außenprofil (32, 34, 36) des Spoilers (30) passt.

2. Wischblatt nach Anspruch 1, **dadurch gekennzeichnet, dass** die Anzeigevorrichtung (38) mehrere voneinander getrennte Anzeigefelder (40, 42, 44) besitzt.

3. Wischblatt nach Anspruch 1 oder 2, **dadurch gekennzeichnet, dass** auf Abströmseite (34) der Anzeigevorrichtung (38) ein Anzeigefeld (42) vorgesehen ist, das in Abhängigkeit von der zeitlichen Belastung durch Witterungs- oder Umwelteinflüsse seine Farbe ändert.

4. Wischblatt nach einem der vorhergehenden Ansprüche, **dadurch gekennzeichnet, dass** das Anzeigefeld (42) aus einem Grundmaterial besteht oder mit einem Grundmaterial beschichtet ist, das mit der zeitlichen Belastung durch die Witterungs- oder Umwelteinflüsse seine Farbe ändert und eine Beschriftung (48) enthält, deren Farbe gleich der Ausgangsfarbe des Grundmaterials des Anzeigefelds (42) ist, sich aber nicht oder unterschiedlich zum Grundmaterial des Anzeigefelds (42) verändert.

5. Wischblatt nach einem der Ansprüche 2 bis 4, **dadurch gekennzeichnet, dass** auf der Abströmseite (34) ein weiteres Anzeigefeld (44) für Angaben eines Wischblattherstellers vorgesehen ist.

6. Wischblatt nach Anspruch 1 , **dadurch gekennzeichnet, dass** auf der Anströmseite (32) der Anzeigevorrichtung ein Anzeigefeld (40) für Angaben eines Fahrzeugherstellers vorgesehen ist.

## Claims

1. Wiper blade comprising a wiper strip (12) with a wiper lip (14) which is connected to a head strip (18) via a tilting web (16), wherein the head strip (18) has lateral longitudinal grooves (20) in which spring rails are inserted as a supporting element, said spring rails being covered by edges (36) of a fitted spoiler (30) and to which spring rails a connecting element (24) for the articulated connection of a wiper arm is fastened, wherein end caps close off the spoiler at the ends thereof, **characterized by** a display device (38) which consists of a plastics part with a display field (40, 42, 44) for displaying the loading and wear due to atmospheric and environmental influences and is clipped to the edges (35) of the spoiler by means of claws (52), wherein the display device (38) has an identical cross-sectional profile to the spoiler (30) of the wiper blade (10), and the inner profile (50) of the display device (38) matches the outer profile (32, 34, 36) of the spoiler (30).

2. Wiper blade according to Claim 1, **characterized in that** the display device (38) has a plurality of display fields (40, 42, 44) separated from one another.

3. Wiper blade according to Claim 1 or 2, **characterized in that** the outflow side (34) of the display device (38) is provided with a display field (42) which changes its colour depending on the temporal loading due to atmospheric or environmental influences.

4. Wiper blade according to one of the preceding claims, **characterized in that** the display field (42) is composed of a basic material or is coated with a basic material which changes its colour with the temporal loading by the atmospheric or environmental influences and contains a legend (48), the colour of which is identical to the initial colour of the basic material of the display field (42), but does not change or changes differently from the basic material of the display field (42).

5. Wiper blade according to one of Claims 2 to 4, **characterized in that** the outflow side (34) is provided with a further display field (44) for details of a wiper blade manufacturer.

6. Wiper blade according to Claim 1, **characterized in that** the approach-flow side (32) of the display device is provided with a display field (40) for details of a vehicle manufacturer.

## Revendications

1. Balai d'essuie-glace, comprenant une raclette d'essuie-glace (12), avec une lèvre d'essuie-glace (14), qui est connectée par le biais d'une nervure basculante (16) à une raclette de tête (18), la raclette de tête (18) présentant des rainures longitudinales (20) dans lesquelles sont insérés des rails élastiques servant d'élément de support, lesquels sont recouverts par des bords (36) d'un béquet monté (30) et sur lesquels est fixé un élément de raccordement (24) pour la connexion articulée d'un bras d'essuie-glace, **caractérisé par** un dispositif d'affichage (38), qui se compose d'une partie en plastique avec un champ d'affichage (40, 42, 44) pour l'affichage de la contrainte et de l'usure dues aux influences des intempéries et de l'environnement, et qui et enclipsé au moyen de griffes (52) au niveau des bords (35) du béquet, le dispositif d'affichage (38) ayant un profil en section transversale identique au béquet (30) du balai d'essuie-glace (10) et le profil intérieur (50) du dispositif d'affichage (38) étant adapté au profil extérieur (32, 34, 36) du béquet (30).

2. Balai d'essuie-glace selon la revendication 1, **caractérisé en ce que** le dispositif d'affichage (38) possède plusieurs champs d'affichage (40, 42, 44) séparés les uns des autres.

3. Balai d'essuie-glace selon la revendication 1 ou 2, **caractérisé en ce qu'**un champ d'affichage (42) est prévu sur le côté de sortie (34) du dispositif d'affichage (38), lequel change de couleur en fonction de la contrainte dans le temps due aux influences des intempéries ou de l'environnement.

4. Balai d'essuie-glace selon l'une quelconque des revendications précédentes, **caractérisé en ce que** le champ d'affichage (42) se compose d'un matériau de base ou est revêtu d'un matériau de base qui change de couleur avec la contrainte dans le temps due aux influences des intempéries et de l'environnement, et contient des inscriptions (48) dont la couleur est identique à la couleur de départ du matériau de base du champ d'affichage (42), mais ne change pas ou change différemment du matériau de base du champ d'affichage (42).

5. Balai d'essuie-glace selon l'une quelconque des revendications 2 à 4, **caractérisé en ce que** sur le côté de sortie (34) est prévu un champ d'affichage supplémentaire (44) pour indiquer le fabricant du balai d'essuie-glace.

6. Balai d'essuie-glace selon la revendication 1, **caractérisé en ce que** sur le côté d'afflux (32) du dispositif d'affichage est prévu un champ d'affichage (40) pour indiquer le fabricant du véhicule.
